# FASCICULE DE BREVET EUROPEEN

(11) **EP 2 692 631 B1**
(45) Date de publication et mention de la délivrance du brevet: **06.05.2015**
(21) Numéro de dépôt: 13177850.8
(22) Date de dépôt: 24.07.2013
(51) Int. Cl.: B64C 1/06

(54) **Cadre de fuselage d'aéronef à section évolutive**
Spant eines Luftfahrzeugs mit verjüngtem Abschnitt
Aircraft fuselage frame with tapered section

(30) Priorité: 30.07.2012 FR 1257347
(43) Date de publication de la demande: 05.02.2014
(73) Titulaire: Airbus Operations, 31060 Toulouse (FR)
(72) Inventeur: Cazeneuve, Hélène, 31470 Fontenilles (FR); Monteillet, Fabrice, 31100 Toulouse (FR); Marchipont, Yann, 31140 Launaguet (FR)
(74) Mandataire: Santarelli

(56) Documents cités:
- GB-A- 733 830
- US-A- 1 922 063
- US-A1- 2009 057 487

## Description

L'invention concerne un élément de structure de cadre de fuselage d'aéronef. Un tel élément est montré dans ledocument US 1 922 063 A. De manière générale, les structures de fuselage d'aéronef sont composées d'une peau à laquelle sont fixés, entre autres, des éléments de structure appelés raidisseurs ou cadres.

De façon générale, de tels éléments de structure se présentent sous la forme d'un profilé s'étendant selon une courbe définie par une succession de rayons de courbure, de manière à suivre la propre courbure de la peau du fuselage.

La section de ces profilés, sensiblement constante, présente le plus souvent une forme générale en L, en U, en Z, ou d'autres formes plus ou moins complexes qui comprennent toujours au moins une âme et une à deux ailes situées à l'une et/ou l'autre extrémité de l'âme.

Lorsqu'ils sont constitués de matériaux métalliques (alliages d'aluminium ou de titane), les cadres sont fabriqués à partir de profilés extrudés, puis mis en forme par déformation plastique, par exemple par étirage ou par roulage.

Ces procédés de fabrication, particulièrement économiques, ne sont toutefois applicables que sur des profilés dont la section est constante sur toute la longueur.

Or, pour réduire la masse du fuselage, il est souhaitable que les dimensions de la section soient les plus faibles possibles hors certains points où les efforts subis sont localement importants.

Pour cela, il est connu de fabriquer un produit intermédiaire par extrusion et formage plastique, de section et / ou d'épaisseur plus importante que la pièce finale, puis d'usiner par enlèvement de matière ce produit de manière à adapter localement sa section et son épaisseur.

Alternativement, il est également connu d'obtenir l'élément de structure par enlèvement de matière dans une plaque plus épaisse.

Ces procédés d'obtention sont cependant beaucoup moins économiques, car ils nécessitent de réduire en copeaux une grande quantité de matière.

Afin de réduire encore davantage la masse des fuselages, il est également connu de substituer aux matériaux métalliques des matériaux composites à renforts fibreux.

Les profilés sont ainsi notamment obtenus à partir de fibres empilées selon des orientations et une séquence d'empilement définies.

Un exemple d'un tel profilé est décrit dans le document FR 2 970 753. Ce dernier est fabriqué en plaçant plusieurs couches de fibres sèches d'orientation définie (plis) dans un moule ayant la forme de la section et la courbure de la pièce. Les fibres sont ensuite noyées dans la résine par transfert ou par infusion de résine.

Pour des profilés courbes comme les cadres de fuselage, un tel procédé d'obtention nécessite de faire épouser une section courbe à des fibres qui ne présentent aucune capacité de déformation plastique, et qui ne doivent pas se froisser ou onduler sous peine de faire chuter les caractéristiques mécaniques du produit ainsi obtenu.

Cette opération, réalisée de façon manuelle, nécessite une certaine dextérité de la part de l'opérateur et conduit de fait à des coûts de production élevés.

Alternativement, les profilés peuvent être fabriqués à partir de fibres pré-imprégnées déposées sur l'outillage par placement de fibres.

Une telle opération consiste à réaliser un drapage tridimensionnel par fines bandes, par exemple à l'aide d'un robot équipé d'une tête de placement de fibres.

Pour des applications aéronautiques, les fibres sont constituées de carbone et la matrice d'une résine thermodurcissable.

Habituellement, les profilés réalisés à partir de cette technique de fabrication sont dimensionnés vis-à-vis du critère prépondérant qu'est la tolérance aux dommages, autrement dit la tenue mécanique résiduelle après impact.

Ceci est notamment dû au fait que la géométrie quasiment plane de l'aile dans le sens d'extension du profilé facilite le flambage local de ce dernier, propageant ainsi le délaminage du stratifié après impact et entraînant son endommagement.

Compte tenu de ce qui précède, il existe donc le besoin de réaliser des éléments de structure de fuselage d'aéronef de masse réduite, ayant une résistance résiduelle en compression après impact élevée.

A cet effet, l'invention concerne un élément de structure de cadre de fuselage d'aéronef présentant une forme générale de profilé allongé comprenant une âme et au moins une aile ayant une section en forme d'arc de cercle sur la longueur du profilé hormis sur au moins une portion d'extrémité du profilé dans laquelle ladite section évolue de manière à avoir une section rectiligne perpendiculaire à ladite âme.

La géométrie de l'aile définie par une forme courbe tangente à l'âme permet de réduire le flambage local de l'élément de structure, et diminue ainsi la propagation du délaminage du stratifié après impact.

L'évolution de la section de l'aile d'une géométrie courbe à une géométrie plane permet de conserver un encombrement et une masse optimale dans les zones de raccord entre les éléments de structure au niveau des extrémités de liaison.

L'élément de structure de cadre présente ainsi une âme localement suffisamment haute pour résister aux sollicitations de matage et à la fatigue aux points de raccordement entre éléments.

En effet, compte tenu de la dimension importante des fuselages d'aéronefs de transport commerciaux, un cadre est constitué de plusieurs éléments de structure formant des secteurs de la circonférence du fuselage.

Ces éléments sont assemblés par éclissage, autrement dit par l'intermédiaire d'éclisses fixées aux cadres à l'aide de rivets.

De telles liaisons doivent comporter suffisamment de fixations pour transmettre la charge mécanique qu'elles supportent d'une pièce à l'autre.

Ainsi, outre le critère de la tolérance aux dommages, les matériaux choisis ne possédant pas d'aptitude à la déformation plastique, la résistance aux sollicitations de matage (transmissions de flux d'effort entre les surfaces de deux pièces en contact dans les zones d'assemblage au cours des chocs) entre également en jeu.

Enfin, de manière à ce que les fixations résistent à la fatigue et au matage, des règles d'espacement entre elles doivent être respectées.

Pour pouvoir installer le nombre de fixations adapté à la reprise des différentes charges aux liaisons tout en respectant les règles d'espacement desdites fixations, l'âme du profilé doit être suffisamment haute (i.e. suffisamment longue lorsqu'on se place dans le plan de la section du profilé).

Pour autant, cette hauteur ne doit pas être trop importante, sous peine d'augmenter la masse de la structure et de réduire le volume disponible à l'intérieur du fuselage, réservé à la charge commerciale et à l'installation des systèmes.

La section rectiligne perpendiculaire à l'âme à l'extrémité de liaison permet ainsi d'obtenir le meilleur compromis, consistant à augmenter au maximum la hauteur de l'âme tout en minimisant la hauteur totale du profilé, c'est-à-dire à minimiser les rayons de courbure entre la ou les ailes et l'âme.

En pratique, l'élément de structure de cadre comporte deux extrémités de liaison, ladite section évoluant le long du profilé de manière à avoir, aux deux extrémités de liaison, une section rectiligne perpendiculaire à ladite âme.

Selon une caractéristique, le profilé a une hauteur constante le long du profilé, la hauteur de la partie d'âme dans la section de forme courbe du profilé étant inférieure à la hauteur de la partie d'âme dans la section rectiligne perpendiculaire à l'âme.

Pour renforcer l'élément de structure en certains points où les efforts subis sont les plus importants, l'épaisseur de l'élément peut varier le long du profilé.

La hauteur de l'élément de structure de cadre peut également varier le long du profilé.

Afin de s'adapter à la courbure locale du fuselage, le profilé s'étend selon une courbe de rayon fixe ou variable.

De manière à alléger l'élément de structure de cadre, il est réalisé dans un matériau composite à renforts fibreux à fibres continues.

Ces fibres sont par exemple des fibres de carbone, assurant ainsi une grande résistance mécanique vis-à-vis des modes de déformation macroscopiques ou primaire du fuselage.

L'invention concerne également un ensemble d'éléments de structure de cadre tels que décrits ci-dessus, qui sont assemblés l'un à l'autre par des extrémités de liaison respectives, la section de forme courbe d'une ou des ailes du profilé des éléments de structure évoluant le long du profilé de manière à avoir, auxdites extrémités de liaison respectives, une section rectiligne et perpendiculaire à l'âme.

Cela permet d'installer le nombre de fixations adapté à la reprise des différentes charges aux liaisons tout en respectant les règles d'espacement desdites fixations.

L'invention concerne également un aéronef comprenant un élément de structure de cadre tel que brièvement mentionné ci-dessus.

D'autres caractéristiques et avantages apparaitront au cours de la description qui va suivre, donnée à titre d'exemple non limitatif et faite en référence aux dessins annexés, sur lesquels :
- la figure 1 est une représentation schématique en perspective d'un mode de réalisation d'une portion d'un élément de structure avec une aile ayant une section en arc de cercle de rayon constant ;
- la figure 2 est une représentation schématique en perspective d'une portion d'extrémité d'un élément de structure, illustrant la transition entre une aile avec une section en arc de cercle et une aile avec une section rectiligne ;
- la figure 3 est une représentation schématique en perspective de la portion d'extrémité de la figure 2 sous un autre angle ;
- la figure 4 est une représentation schématique en coupe de l'élément de la figure 2 dans la section selon la ligne IV-IV ; et
- la figure 5 est une représentation schématique en coupe de l'élément de la figure 2 dans la section selon la ligne V-V.

Dans tout ce qui suit, on entendra par section une section transversale au profilé, normale à la direction longitudinale locale dans laquelle il s'étend.

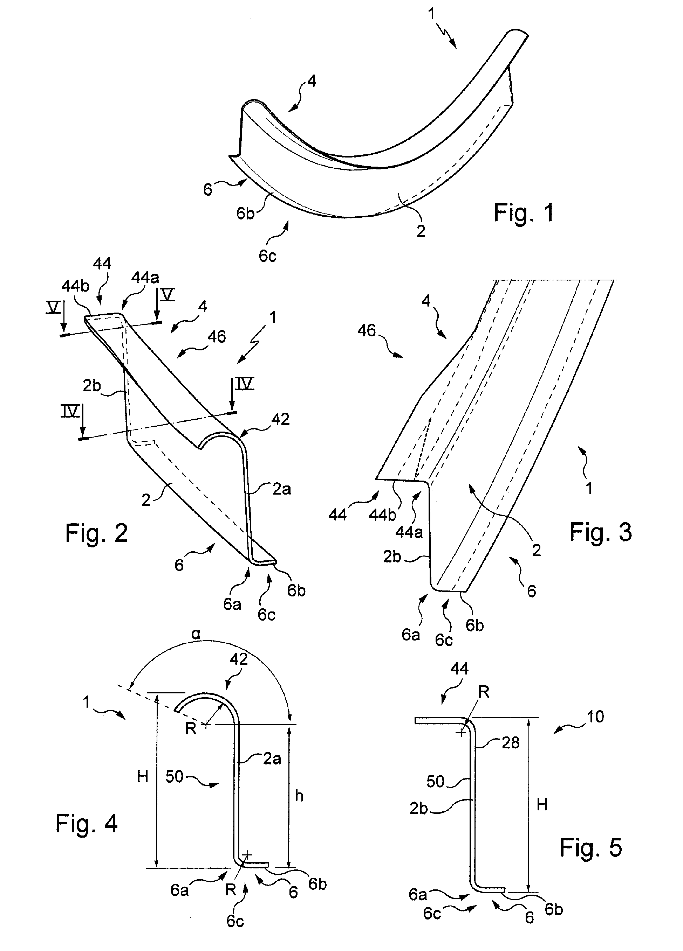

L'élément de structure 1 de fuselage d'aéronef représenté partiellement aux figures 1, 2 et 3, également appelé cadre, présente une forme générale de profilé allongé, qui s'étend localement selon une direction longitudinale.

Comme illustré à la figure 1, ce profilé s'étend selon une courbe de manière à ce que l'élément de structure 1 puisse épouser la forme d'un fuselage (non représenté) auquel il est destiné à être fixé. Cette courbe peut être de rayon fixe ou variable.

Dans un mode de réalisation préféré, cet élément 1 est réalisé dans un matériau composite à renforts fibreux à fibres continues, par exemple par placement de fibres pré-imprégnées sur un outillage.

Plus particulièrement, pour une application aéronautique, les fibres sont des fibres de carbone.

L'élément de structure 1 comprend une âme 2 rectiligne, prolongée ici, de part et d'autre de sa hauteur (longueur dans le plan de la section de l'élément de structure), respectivement par une aile supérieure 4 et une aile inférieure 6 dont on détaillera la forme plus loin.

Dans le cadre de l'intégration de l'élément de structure dans le fuselage d'un aéronef de forme classique, l'aile supérieure 4 correspond à l'aile située vers l'intérieur du fuselage.

A l'inverse, l'aile inférieure 6 correspond à l'aile située vers l'extérieur du fuselage, c'est-à-dire l'aile la plus proche de ce fuselage.

Cette aile inférieure 6 présente une section rectiligne, perpendiculaire à l'âme 2, et constante dans sa géométrie tout le long de l'élément de structure 1.

On notera que dans les modes de réalisation particuliers présentés sur les figures 1 à 5, l'élément de structure 1 ne présente pas d'arête droite, et donc la transition de l'âme 2 à l'aile inférieure 6 présente une courbure 6a.

Une arête se substituant à la courbure 6a peut cependant être envisagée dans d'autres modes de réalisation.

L'aile inférieure 6 se prolonge, à partir de la courbure 6a, par une extension rectiligne inférieure 6b qui constitue ainsi le « pied » du cadre.

Comme illustré à la figure 1, l'aile supérieure 4 présente une section de forme courbe, et ici en forme d'arc de cercle.

Dans la portion de l'élément de structure illustrée à la figure 1, correspondant par exemple à une portion centrale d'un élément de structure, l'aile supérieure 4 a ainsi une géométrie à double courbure.

Ainsi, l'aile supérieure 4 présente dans sa section transversale une courbure de rayon constant, formant ainsi un arc de cercle.

Par ailleurs, cette aile supérieure 4 suit dans sa direction longitudinale, la courbure du profilé.

On peut toutefois envisager, dans d'autres modes de réalisation, un profilé rectiligne ou encore un profilé ayant plusieurs zones de courbure en fonction de la forme de la peau du fuselage.

A proximité d'une extrémité de liaison de l'élément de structure, l'aile supérieure 4 varie en section le long de l'élément de structure 1.

Comme on peut le voir sur les figures 2 et 4, dans une portion 42 de l'élément de structure 1, l'aile supérieure 4 possède une section de forme courbe, et ici en forme d'arc de cercle.

Dans cette portion 42 de l'élément de structure 1, la section du profilé présente donc une forme en J.

La section de l'aile supérieure 4 évolue ensuite progressivement, à partir de cette portion 42, d'une section en forme d'arc de cercle à une section rectiligne, située à une extrémité de liaison 44.

A cette extrémité de liaison 44 de l'élément de structure 1, la section du profilé présente donc une forme en Z.

On notera que pour l'assemblage d'un ensemble d'éléments de structure, chaque élément de structure comprend de préférence deux extrémités de liaison 44 pour relier des éléments de structure l'un à l'autre.

Ainsi, au niveau de chaque portion d'extrémité 46 de l'élément de structure 1, la géométrie de l'aile 4 passe par une succession de formes courbes de rayons de courbure différents pour évoluer dans cette portion d'extrémité 46 de la forme en J à la forme en Z, et inversement.

L'extrémité de liaison 44 de l'aile supérieure 4, que l'on peut voir plus en détail aux figures 3 et 5, présente donc une section rectiligne perpendiculaire à l'âme 2.

A nouveau, l'élément de structure 1 ne présentant dans le présent mode de réalisation pas d'arête droite, la transition de l'âme 2 à l'extrémité de liaison 44 de l'aile supérieure 4 présente une courbure 44a.

Une arête se substituant à la courbure 44a peut cependant être envisagée dans d'autres modes de réalisation.

L'aile supérieure 4 se prolonge, à partir de la courbure 44a, par une extension rectiligne supérieure 44b.

Comme on peut notamment le constater sur les figures 4 et 5, l'aile supérieure 4 s'étend à partir de l'âme 2 dans le sens opposé à l'aile inférieure 6.

Toutefois, dans d'autres modes de réalisation que ceux présentés sur les figures 1 à 5, en particulier un dans lequel l'élément de structure est un profilé à section en C, l'aile supérieure 4 peut s'étendre dans le même sens que l'aile inférieure 6 à partir de l'âme 2.

De plus, il est également envisageable que ces deux ailes 4, 6 soient de même longueur, ou encore de longueurs différentes.

On va maintenant décrire, en référence aux figures 4 et 5, les avantages de l'évolution de la section de l'aile supérieure 4 dans la portion d'extrémité 46 de l'élément de structure 1.

La portion 42 présente une section en forme d'arc de cercle de rayon R s'étendant sur un secteur α.

Ceci permet notamment de rendre l'aile supérieure 4 localement plus résistante aux impacts, grâce à son rayon permettant de réduire le flambage local.

Plus particulièrement, l'élément de structure 1 étant réalisé, de préférence, en matériaux composites à renforts fibreux, une telle réduction du flambage diminue la propagation du délaminage du stratifié.

La valeur du rayon R et du secteur α seront notamment choisis de manière à obtenir la tolérance aux dommages (tenue mécanique résiduelle après impact) et la masse voulue pour l'élément de structure 1.

Cette masse dépend également de la hauteur H de l'élément de structure 1.

On remarquera à cet effet que dans cette portion 42 de l'élément de structure 1, la partie d'âme 2a présente une hauteur h inférieure à la hauteur H de l'élément de structure 1.

De manière générale, plus le rayon de courbure R de la forme courbe de la section de l'aile supérieure 4 est grand, plus la hauteur h de la partie d'âme 2a est petite lorsque la hauteur H de l'élément de structure 1 est constante.

De préférence, cette portion 42 de l'élément de structure 1 de section de forme courbe s'étend sur la majeure partie du profilé, seules les portions d'extrémités 46 du profilé ayant une section qui évolue de manière à avoir une section rectiligne perpendiculaire à l'âme 2 aux extrémités de liaison 44.

A l'extrémité de liaison 44 de l'élément de structure 1, la section est rectiligne et perpendiculaire à l'âme 2b.

L'avantage principal de cette configuration réside dans le fait que la hauteur de la partie d'âme 2b a sensiblement pour valeur la hauteur H de l'élément de structure 1. Elle est donc maximale pour un encombrement fixe, c'est-à-dire une hauteur constante H du profilé.

Cette partie d'âme 2b plus haute permet d'installer le nombre de fixations adapté à la reprise des charges au niveau de la liaison, tout en respectant les éventuelles règles d'espacement de ces fixations.

Dans le mode de réalisation présenté sur les figures, l'élément de structure 1 présente une épaisseur et une hauteur H constantes.

Toutefois, dans d'autres modes de réalisation, la hauteur et/ou l'épaisseur de l'âme 2 du profilé peut au contraire varier localement le long du profilé de manière à s'adapter à des critères géométriques et dimensionnements locaux, ou à des contraintes ou efforts locaux, pour permettre de placer davantage d'équipements, etc.

Les exemples qui viennent d'être décrits ne sont que des modes de réalisation possibles de l'invention, qui ne s'y limite pas.

On notera que dans les exemples décrits précédemment, l'élément de structure de fuselage d'aéronef présente au moins une aile de profilé ayant une section de forme courbe qui évolue pour avoir aux deux extrémités du profilé une section rectiligne perpendiculaire à l'âme.

On notera qu'éventuellement l'élément de structure peut conserver un profilé allongé ayant une âme et une aile avec une section de forme courbe tangente à l'âme, à l'une des extrémités de liaison de l'élément de structure ou aux deux extrémités de liaison de l'élément de structure.

## Revendications

1. Elément de structure de cadre de fuselage d'aéronef, présentant une forme générale de profilé allongé comprenant une âme (2) et au moins une aile (4, 6), **caractérisé en ce que** ladite au moins une aile (4) a une section en forme d'arc de cercle sur la longueur du profilé hormis sur au moins une portion d'extrémité (46) du profilé dans laquelle ladite section évolue de manière à avoir une section rectiligne perpendiculaire à ladite âme (2).

2. Elément de structure de cadre selon la revendication 1 , **caractérisé en ce qu'il** comporte deux extrémités de liaison (44), ladite section de forme courbe évoluant le long du profilé de manière à avoir, aux deux extrémités de liaison (44), une section rectiligne perpendiculaire à ladite âme (2).

3. Elément de structure de cadre selon l'une des revendications 1 ou 2, **caractérisé en ce que** le profilé a une hauteur constante (H) le long du profilé, la hauteur (h) de la partie d'âme (2a) dans la section de forme courbe du profilé étant inférieure à la hauteur (H) de la partie d'âme (2b) dans la section rectiligne perpendiculaire à l'âme (2).

4. Elément de structure de cadre selon l'une quelconque des revendications 1 à 2, **caractérisé en ce que** la hauteur (H) de l'élément de structure (1) varie le long du profilé.

5. Elément de structure de cadre selon l'une quelconque des revendications précédentes, **caractérisé en ce que** l'épaisseur de l'élément de structure (1) varie le long du profilé.

6. Elément de structure de cadre selon l'une quelconque des revendications précédentes, **caractérisé en ce que** le profilé allongé s'étend selon une courbe de rayon fixe ou variable.

7. Elément de structure de cadre selon l'une quelconque des revendications 1 à 6, **caractérisé en ce qu'il** est réalisé dans un matériau composite à renforts fibreux à fibres continues.

8. Ensemble d'éléments de structure de cadre conformes à l'une quelconque des revendications précédentes, **caractérisé en ce que** lesdits éléments de structure (1) sont assemblés l'un à l'autre par des extrémités de liaison (44) respectives, la section de forme courbe d'une ou des ailes du profilé des éléments de structure évoluant le long du profilé de manière à avoir, auxdites extrémités de liaison (44) respectives, une section rectiligne et perpendiculaire à l'âme (2).

9. Aéronef comprenant un ensemble d'éléments de structure (1) de cadre de fuselage d'aéronef selon la revendication 8.

## Patentansprüche

1. Rahmenstrukturelement eines Luftfahrzeugrumpfes, welches eine allgemeine Form eines lang gestreckten Profilteils aufweist, das einen Steg (2) und mindestens einen Flansch (4,6) aufweist, **dadurch gekennzeichnet, dass** der mindestens eine Flansch (4) einen kreisbogenförmigen Querschnitt über der Länge des Profilteils aufweist, außer auf mindestens einem Endabschnitt (46) des Profilteils, in welchem sich der Querschnitt derart ändert, dass ein zum Steg (2) senkrechter geradliniger Querschnitt vorliegt.

2. Rahmenstrukturelement nach Anspruch 1, **dadurch gekennzeichnet, dass** es zwei Verbindungsenden (44) aufweist, wobei sich der Querschnitt von gekrümmter Form entlang des Profilteils derart ändert, dass an den zwei Verbindungsenden (44) ein zum Steg (2) senkrechter geradliniger Querschnitt vorliegt.

3. Rahmenstrukturelement nach Anspruch 1 oder 2, **dadurch gekennzeichnet, dass** das Profilteil eine konstante Höhe (H) entlang des Profilteils aufweist, wobei die Höhe (h) des Stegteils (2a) in dem Querschnitt von gekrümmter Form des Profilteils kleiner als die Höhe (H) des Stegteils (2b) in dem zum Steg (2) senkrechten geradlinigen Querschnitt ist.

4. Rahmenstrukturelement nach einem der Ansprüche 1 bis 2, **dadurch gekennzeichnet, dass** die Höhe (H) des Strukturelements (1) entlang des Profilteils variiert.

5. Rahmenstrukturelement nach einem der vorhergehenden Ansprüche, **dadurch gekennzeichnet, dass** die Dicke des Strukturelements (1) entlang des Profilteils variiert.

6. Rahmenstrukturelement nach einem der vorhergehenden Ansprüche, **dadurch gekennzeichnet, dass** sich das lang gestreckte Profilteil entlang einer Kurve mit festem oder variablem Radius erstreckt.

7. Rahmenstrukturelement nach einem der Ansprüche 1 bis 6, **dadurch gekennzeichnet, dass** es aus einem faserverstärkten Verbundmaterial mit Endlosfasern hergestellt ist.

8. Gesamtheit von Rahmenstrukturelementen nach einem der vorhergehenden Ansprüche, **dadurch gekennzeichnet, dass** die Strukturelemente (1) an jeweiligen Verbindungsenden (44) aneinander gefügt sind, wobei sich der Querschnitt von gekrümmter Form eines Flansches oder der Flansche des Profilteils der Strukturelemente entlang des Profilteils derart ändert, dass an den jeweiligen Verbindungsenden (44) ein geradliniger und zum Steg (2) senkrechter Querschnitt vorliegt.

9. Luftfahrzeug, das eine Gesamtheit von Rahmenstrukturelementen (1) eines Luftfahrzeugrumpfes nach Anspruch 8 aufweist.

## Claims

1. Aircraft fuselage structural frame element, having the general form of an elongated profile, comprising a web (2) and at least one flange (4, 6), **characterized in that** said at least one flange (4) has an arc-shaped cross-section over the length of the profile apart from on at least one end portion (46) of the profile in which said cross-section varies so as to have a straight cross-section perpendicular to said web (2).

2. Structural frame element according to claim 1, **characterized in that** it comprises two connecting ends (44), said curved cross-section varying along the profile in such a way as to have, at the two connecting ends (44), a straight cross-section perpendicular to said web (2).

3. Structural frame element according to one of claims 1 or 2, **characterized in that** the profile has a constant height (H) along the profile, the height (h) of the web portion (2a) in the curved cross-section of the profile being smaller than the height (H) of the web portion (2b) in the straight cross-section perpendicular to the web (2).

4. Structural frame element according to any one of claims 1 to 2, **characterized in that** the height (H) of the structural element (1) varies along the profile.

5. Structural frame element according to any one of the previous claims, **characterized in that** the thickness of the structural element (1) varies along the profile.

6. Structural frame element according to any one of the previous claims, **characterized in that** the elongated profile extends over a fixed or variable radius of curvature.

7. Structural frame element according to any one of claims 1 to 6, **characterized in that** it is made from a continuous fibre-reinforced composite material.

8. Set of structural frame elements according to any one of the previous claims, **characterized in that** said structural elements (1) are assembled together by respective connecting ends (44), the curved cross-section of one or both of the flanges of the profile of the structural elements varying along the profile in such a way as to have, at said respective connecting ends (44), a straight cross-section perpendicular to the web (2).

9. Aircraft comprising a set of aircraft fuselage structural frame elements (1) according to claim 8.
